# EUROPÄISCHE PATENTSCHRIFT

(11) **EP 0 412 303 B1**
(45) Veröffentlichungstag und Bekanntmachung des Hinweises auf die Patenterteilung: **31.08.1994**
(21) Anmeldenummer: 90113184.7
(22) Anmeldetag: 11.07.1990
(51) Int. Cl.: H02G 3/04, H02G 9/02, F16L 57/00

(54) **Vorrichtung zum Schutz von auf dem Boden verlegten Installationsleitungen**
Protection device for conduits installed on the floor
Dispositif de protection de conduits installés sur le plancher

(30) Priorität: 08.08.1989 DE 8909520 U
(43) Veröffentlichungstag der Anmeldung: 13.02.1991
(73) Patentinhaber: PFLITSCH GmbH. & Co. KG., 42499 Hückeswagen (DE)
(72) Erfinder: Pflitsch, Harald, D-5608 Radevormwald-Dahlerau (DE)
(74) Vertreter: Köchling, Conrad-Joachim

(56) Entgegenhaltungen:
- DE-A- 2 220 745
- FR-A- 2 326 132
- GB-A- 2 120 464

## Beschreibung

Die Erfindung betrifft eine Vorrichtung zum Schutz von auf dem Boden verlegten Installationsleitungen, bestehend aus einer überfahrbaren Rampe.

In der betrieblichen Praxis besteht ein erhebliches Bedürfnis dafür, bodenseitig in Maschinenhallen oder dergleichen verlegte Installationsleitungen, wie Schläuche (Hydraulik, Kühlflüssigkeit, Luft und dergleichen) oder auch Rohrleitungen oder elektrische Leitungen durch überfahrbare Rampen oder dergleichen zu schützen, so daß vermieden ist, daß das Bedienungspersonal über diese Installationsleitungen stolpert und insbesondere dafür gesorgt ist, daß Flurfördergeräte, wie beispielsweise Gabelstapler, diese Installationsleitungen ohne Beschädigung derselben überfahren können.

Im Stand der Technik ist hierzu beispielsweise bekannt, daß beidseitig neben den Installationsleitungen Holzbohlen ausreichender Dicke verlegt werden, die einen gewissen Schutz und eine Überfahrhilfe bilden. Eine Vorrichtung gemäß dem O.B. des Anspruchs 1 ist aus dem Dokument GB-A-2 120 464 bekannt.
Sie besteht aus Vollmaterial, weist einen trapezförmigen Querschnitt und wenigstens einen Kanal für die zu schützenden Kabel auf.

Ausgehend von diesem Stand der Technik liegt der Erfindung die Aufgabe zugrunde, eine äußerst einfach aufgebaute Vorrichtung zu schaffen, die einfach verlegt werden kann und einen vollständigen Schutz für verlegte Installationsleitungen oder dergleichen bildet.

Zur Lösung dieser Aufgabe schlägt die Erfindung vor, daß die Rampe aus Rinnenprofilen gebildet ist, wobei jedes Rinnenprofil einen in der Gebrauchslage lotrechten Aufstandssteg, eine oberseitig rechtwinklig von diesem abragende Fläche und eine an diese anschließende Schrägfläche aufweist, deren freie Randkante in der von der Aufstandsrandkante des Aufstandssteges aufgespannten Ebene endet.

Durch diese Ausbildung ist es möglich, beispielsweise nahe einer Wand auf dem Boden verlegte Installationen durch die Rampe zu sichern, indem die Rampe mit ihrem Aufstandssteg an die Wandfläche angelegt und mit ihrer Schrägfläche von der Wand wegweist. Eine derartige Installation ist beispielsweise auch bei der Anordnung von Installationen nahe eines Maschinengestells oder dergleichen nützlich.

Bevorzugt ist aber vorgesehen, daß zwei Rinnenprofile mit parallel zueinander gerichteten und aneinander angeordneten Aufstandsstegen aneinandergefügt sind.

Durch diese Ausbildung und Anordnung ist es möglich, freie auf dem Boden verlegte Installationsleitungen zu schützen und Überfahrhilfen zu bilden, wobei durch die gewählte Raumform bei relativ geringer Dicke des die Rinnenprofile bildenden Materials ausreichende Stützkräfte erzeugt werden, die eine Deformation des Rinnenprofils beim Überfahren desselben unterbinden.

Insbesondere der lotrecht stehende Aufstandssteg ist geeignet und dazu bestimmt, hohe Kräfte zu übernehmen, ohne daß eine Deformation des Rinnenprofils erfolgen kann.
Auch das nachträgliche Verlegen derartiger Rinnenprofile ist sehr einfach möglich, indem die Rinnenprofile mit den Aufstandsstegen entweder die auf den Boden verlegten Installationsleitungen übergreifend oder diese teilweise übergreifend in die Zwischenräume zwischen parallel verlegten Installationsleitungen eingreifend eingesetzt werden.

Besonders bevorzugt ist vorgesehen, daß die Rinnenprofile an die freie Randkante der Schrägfläche anschließend eine parallel zur Aufstandsebene verlaufende Fläche aufweisen.

Durch diese Anordnung ist sichergestellt, daß beispielsweise ein Radfahrzeug, welches die Rinnenprofile überfahren will, zunächst mit einem Rad oder den Rädern einer Achse auf die parallel zur Aufstandsebene verlaufende Fläche auffährt, wobei hierdurch eine gewisse Lagesicherung des Rinnenprofils an der Aufstandsfläche erfolgt, und dann erst das Fahrzeug weiterfährt und dabei das Rinnenprofil belastet. Trotz der losen Installation auf dem Unterboden ist damit eine weitest gehende Lagesicherheit bei der Benutzung gewährleistet.

Bevorzugt ist ferner vorgesehen, daß die freie Randkante der parallel verlaufenden Fläche nach Art einer Anphasung abgewinkelt ist, wobei die freie Randkante der Anphasung in der Aufstandsebene endet und die parallel verlaufende Fläche mindestens um die Wandstärke des Rinnenprofiles zurückversetzt ist.

Eine in Kombination damit besonders vorteilhafte Weiterbildung wird darin gesehen, daß in die Stirnseiten der Rinnenprofile weitere formähnliche Rinnenprofile teleskopartig einschiebbar sind, deren Aufstandssteglänge mindestens um die Wandstärke des äußeren Rinnenprofils gegenüber dessen Aufstandssteglänge verkürzt ist und dessen parallel zur Aufstandsebene verlaufende Fläche von der mit der Anphasung versehenen parallelen Fläche des äußeren Rinnenprofils übergriffen ist.

Durch diese Anordnung ist es möglich, durch das formähnliche etwas kleinere Rinnenprofil eine teleskopartige Verlängerung des größeren Rinnenprofils zu erreichen, wobei durch weiteren Ansatz eines größeren Rinnenprofils auf das teleskopartig verschiebbare kleinere Rinnenprofil ein weiteres Anbaufeld erzeugt werden kann.

Weiterhin kann bevorzugt sein, daß die aneinander anliegenden Aufstandsstege mittels U-förmiger Verbinder verbindbar sind, die die freie Stegrandkante umgreifen.

Dabei kann vorzugsweise vorgesehen sein, daß die Verbinder mittels Schrauben oder dergleichen Befestigungsmitteln mit den Aufstandsstegen verbindbar sind, wobei die Befestigungsmittel die Stege und die Schenkel der Verbinder durchgreifen.

Auch kann bevorzugt sein, daß die Rinnenprofile aus Warzenblechen geformt sind. Hierdurch wird die Oberfläche im Sinne einer Reibungserhöhung verbessert.

Ein Ausführungsbeispiel der Erfindung ist in der Zeichnung dargestellt und im folgenden näher beschrieben.

Es zeigt:
Fig. 1 eine erfindungsgemäße Vorrichtung in Ansicht,
Fig. 2 eine Einzelheit im Schnitt gesehen;
Fig. 3 eine weitere Einzelheit ebenfalls im Schnitt gesehen.

Die Vorrichtung zum Schutz von auf dem Boden verlegten Installationsleitungen besteht aus einer überfahrbaren Rampe, die aus Rinnenprofilen 1, 1′gebildet ist. Jedes Rinnenprofil 1,1′ weist einen in der Gebrauchslage lotrechten Aufstandssteg 2, 2′ auf. An dessen in der Gebrauchslage oberen Rand ist eine rechtwinklig von diesem abragende Fläche 3,3 ′ angeformt, die in eine Schrägfläche 4,4′ übergeht, deren freie Randkante in der von der Aufstandsrandkante des Aufstandssteges 2,2′ aufgespannten Ebene enden kann. Dabei ist selbstverständlich möglich und vorzugsweise vorgesehen, daß jeweils zwei Rinnenprofile 1 bzw. 1′ mit parallel zueinander gerichteten und aneinander angeordneten Aufstandsstegen 2 bzw. 2′ aneinandergefügt sind, so daß eine überfahrbare Rampe gebildet ist. Im Ausführungsbeispiel weisen die Rinnenprofile 1, 1′ an die Randkante der Schrägfläche anschließend eine parallel zur Aufstandsebene verlaufende Fläche 5,5′ auf. Bei dem Rinnenprofil 1 ist die freie Randkante der parallel verlaufenden Fläche 5 nach Art einer Anphasung 6 abgewinkelt, wobei die freie Randkante der Anphasung 6 in der Aufstandsebene endet und die parallel verlaufende Fläche mindestens um die Wandstärke des Rinnenprofiles 1 zurückversetzt ist.

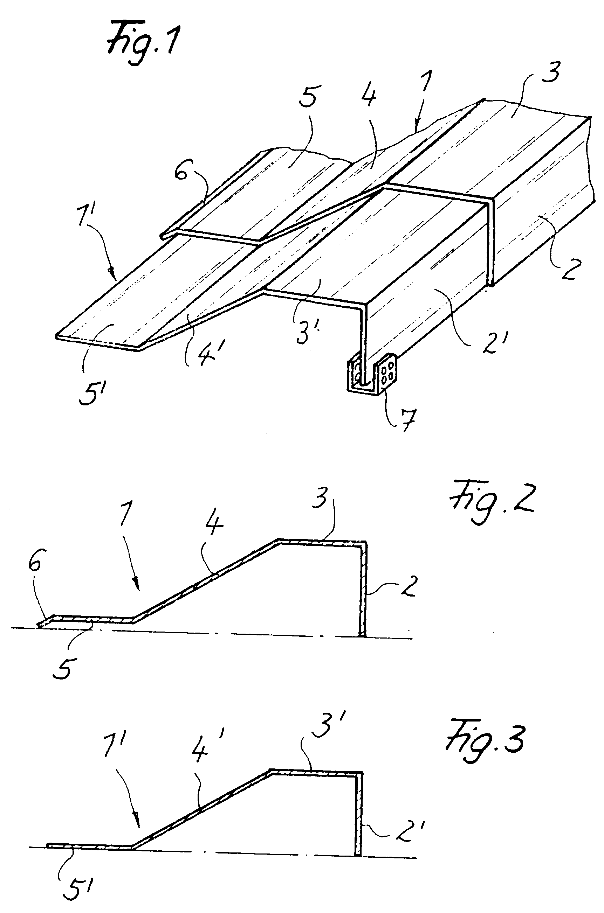

Wie insbesondere aus Figur 1 ersichtlich, ist in die Stirnseite des Rinnenprofiles 1 ein weiteres formähnliches Rinnenprofil 1′ teleskopartig eingeschoben, wobei die Länge von dessen Aufstandssteg 2′ mindestens um die Wandstärke des äußeren Rinnenprofils 1 gegenüber dessen Aufstandsteglänge verkürzt ist. Die Randkante der parallel zur Aufstandsebene verlaufenden Fläche 5′ ist im Bereich, in welchem das Profil 1′ von dem Profil 1 übergriffen ist, von der mit der Anphasung 6 versehenen parallelen Fläche 5 des äußeren Rinnenprofils 1 vollständig übergriffen, wobei die Randkante der Anphasung 6 und die Fläche 5′ auf dem Unterboden aufliegen.

Die Aufstandsstege 2 bzw. 2′ von spiegelsymmetrisch zueinander verlegten Rinnenprofilen 1,1′ sind mittels U-förmiger Verbinder 7 miteinander verbindbar, die die freie Randkante der Aufstandsstege 2′ bzw. 2 umgreifen. Die Befestigung kann mittels durchgreifender Schrauben oder anderer ähnlicher Befestigungsmittel erfolgen.
Die Erfindung ist nicht auf das Ausführungsbeispiel beschränkt, sondern im Rahmen der Offenbarung vielfach variabel.

## Patentansprüche

1. Vorrichtung zum Schutz von auf dem Boden verlegten Installationsleitungen, bestehend aus einer überfahrbaren Rampe, **dadurch gekennzeichnet**, daß die Rampe aus Rinnenprofilen (1,1′) gebildet ist, wobei jedes Rinnenprofil (1,1′) einen in der Gebrauchslage lotrechten Aufstandssteg (2,2′), eine oberseitig rechtwinklig von diesem abragende Fläche (3,3′) und eine an diese anschließende Schrägfläche (4,4′) aufweist, deren freie Randkante in der von der Aufstandsrandkante des Aufstandssteges (2,2′) aufgespannten Ebene endet.

2. Vorrichtung nach Anspruch 1, **dadurch gekennzeichnet**, daß zwei Rinnenprofile (1 bzw. 1′) mit parallel zueinander gerichteten und aneinander angeordneten Aufstandsstegen (2 bzw. 2′) aneinandergefügt sind.

3. Vorrichtung nach Anspruch 1 oder 2, **dadurch gekennzeichnet**, daß die Rinnenprofile (1,1′) an die freie Randkante der Schrägfläche (4,4′) anschließend eine parallell zur Aufstandsebene verlaufende Fläche (5,5′) aufweisen.

4. Vorrichtung nach einem der Ansprüche 1 bis 3, **dadurch gekennzeichnet**, daß die freie Randkante der parallel verlaufenden Fläche (5) nach Art einer Anphasung (6) abgewinkelt ist, wobei die freie Randkante der Anphasung (6) in der Aufstandsebene endet und die parallel verlaufende Fläche (5) mindestens um die Wandstärke des Rinnenprofils (1) zurückversetzt ist.

5. Vorrichtung nach einem der Ansprüche 1 bis 4, **dadurch gekennzeichnet**, daß in die Stirnseiten der Rinnenprofile (1′) weitere formähnliche Rinnenprofile (1′) teleskopartig einschiebbar sind, deren Aufstandssteglänge mindestens um die Wandstärke des äußeren Rinnenprofils (1) gegenüber dessen Aufstandssteglänge verkürzt ist und dessen parallel zur Aufstandsebene verlaufende Fläche (5′) von der mit der Anphasung (6) versehenen parallelen Fläche (5) des äußeren Rinnenprofils (1) übergriffen ist.

6. Vorrichtung nach einem der Ansprüche 1 bis 5, **dadurch gekennzeichnet**, daß die aneinander anliegenden Aufstandsstege (2 bzw. 2′) mittels U-förmiger Verbinder (7) verbindbar sind, die die freie Stegrandkante umgreifen.

7. Vorrichtung nach Anspruch 6, **dadurch gekennzeichnet**, daß die Verbinder (7) mittels Schrauben oder dergleichen Befestigungsmitteln mit den Aufstandsstegen (2,2′) verbindbar sind, wobei die Befestigungsmittel die Stege und die Schenkel der Verbinder durchgreifen.

8. Vorrichtung nach einem der Ansprüche 1 bis 7, **dadurch gekennzeichnet**, daß die Rinnenprofile (1,1′) aus Warzenblechen geformt sind.

## Claims

1. A device for the protection of conduits laid on the floor, consisting of a ramp over which a vehicle can drive,
**characterised in that** the ramp is formed from trough sections (1, 1′), whereby each trough section (1, 1′) comprises a support web (2, 2′) which is vertical in the position of use, a surface (3, 3′) protruding at right angles from said web at the upper side and an inclined surface (4, 4′) connected to said surface, the free edge of which ends in the plane extending from the support edge of the support web (2, 2′).

2. A device according to Claim 1,
**characterised in that** two trough sections (1 and 1′ respectively) are joined with support webs (2 and 2′ respectively) directed mutually parallel and disposed against one another.

3. A device according to Claim 1 or 2,
**characterised in that**, connected to the free edge of the inclined surface (4, 4′), the trough sections (1, 1′) comprise a surface (5, 5′) extending parallel to the support plane.

4. A device according to one of Claims 1 to 3,
**characterised in that** the free edge of the parallel extending surface (5) is bent as a chamfer portion (6), whereby the free edge of the chamfer portion (6) ends in the support plane and the parallel extending surface (5) is set back by at least the wall thickness of the trough section (1).

5. A device according to one of Claims 1 to 4,
**characterised in that** into the front sides of the trough sections (1′) can be telescopically inserted further trough sections (1′) having a similar shape, the length of the support webs of which is shortened by at least the wall thickness of the outer trough section (1) in comparison with the length of its support web and the surface (5′) extending parallel to the support plane of which is covered by parallel surface (5) of the outer trough section (1) provided with the inclined portion (6).

6. A device according to one of Claims 1 to 5,
**characterised in that** the mutually abutting support webs (2 and 2′ respectively) can be connected by means of U-shaped connectors (7), which enclose the free edge of the web.

7. A device according to Claim 6,
**characterised in that** the connectors (7) can be connected to the support webs (2, 2′) by means of screws or similar attachment means, whereby the attachment means pass through the webs and the legs of the connectors.

8. A device according to one of Claims 1 to 7,
**characterised in that** the trough sections (1, 1′) are formed from button plate.

## Revendications

1. Dispositif de protection pour conduits posés sur le sol, qui est composé d'une rampe sur laquelle il est possible de circuler, caractérisé en ce que la rampe est formée par des profilés en forme de gouttière (1, 1′), sachant que chaque profilé en forme de gouttière (1, 1′) présente une aile d'appui (2, 2′) qui, en position d'utilisation, est verticale, une surface (3, 3′) partant en angle droit en haut de cette dernière et une surface inclinée (4, 4′) se raccordant à la précédente, dont l'arête libre du bord se termine dans le plan formé par l'arête du bord de l'aile d'appui (2, 2′).

2. Dispositif selon la revendication 1, caractérisé en ce que deux profilés en forme de gouttière (1 ou 1′) sont assemblés par deux ailes d'appui (2 ou 2′) orientées parallèlement entre elles et disposées l'une contre l'autre.

3. Dispositif selon la revendication 1 ou 2, caractérisé en ce que les profilés en forme de gouttière (1, 1′) présentent une surface (5, 5′) s'étendant parallèlement au plan d'appui et faisant suite à l'arête libre du bord de la surface inclinée (4, 4′).

4. Dispositif selon l'une des revendications 1 à 3, caractérisé en ce que l'arête libre du bord de la surface (5) s'étendant parallèlement est courbée à la manière d'un chanfrein (6), sachant que l'arête libre du bord du chanfrein (6) se termine dans le plan d'appui et que la surface s'étendant parallèlement (5) est au moins en retrait de l'épaisseur de paroi du profilé en forme de gouttière (1).

5. Dispositif selon l'une des revendications 1 à 4, caractérisé en ce que d'autres profilés en forme de gouttière analogues (1′), dont la longueur de l'aile d'appui par rapport à la longueur de l'aile d'appui du profilé extérieur en forme de gouttière (1) est au moins plus courte de l'épaisseur de paroi de ce dernier et dont la surface (5′) s'étendant parallèlement au plan d'appui est recouverte par la surface parallèle (5) du profilé extérieur en forme de gouttière (1) qui est munie du chanfrein (6), peuvent être insérés de manière télescopique dans les faces frontales des profilés en forme de gouttière (1).

6. Dispositif selon l'une des revendications 1 à 5, caractérisé en ce que les ailes d'appui (2 ou 2′) appliquées l'une contre l'autre peuvent être reliées au moyen d'éléments de liaison en forme de U (7) qui entourent l'arête libre du bord de l'aile.

7. Dispositif selon la revendication 6, caractérisé en ce que les éléments de liaison (7) peuvent être reliés aux ailes d'appui (2, 2′) à l'aide de vis ou de moyens de fixation analogues, sachant que les moyens de fixation traversent les ailes et les branches des éléments de liaison.

8. Dispositif selon l'une des revendications 1 à 7, caractérisé en ce que les profilés en forme de gouttière (1, 1′) sont formés à partir de tôles à larmes.
